# EUROPÄISCHE PATENTSCHRIFT

(11) **EP 2 745 967 B1**
(45) Veröffentlichungstag und Bekanntmachung des Hinweises auf die Patenterteilung: **16.12.2020**
(21) Anmeldenummer: 13199290.1
(22) Anmeldetag: 23.12.2013
(51) Int. Cl.: B23B 41/12, B23D 77/00, B23D 77/02, B23Q 11/00, B23Q 11/10

(54) **Verfahren zum Bearbeiten eines an einer Werkzeugmaschine eingespannten hohlen Werkstücks**
Method for machining a hollow workpiece clamped on a machine tool
Procédé d'usinage d'une pièce creuse serrée sur une machine-outil

(30) Priorität: 21.12.2012 AT 506212012; 29.01.2013 AT 500612013
(43) Veröffentlichungstag der Anmeldung: 25.06.2014
(73) Patentinhaber: WFL Millturn Technologies GmbH & Co. KG, A-4030 Linz (AT)
(72) Erfinder: Koll, Reinhard, AT- 4040 Lichtenberg (AT)
(74) Vertreter: Jell, Friedrich

(56) Entgegenhaltungen:
- EP-A1- 0 768 136
- WO-A1-89/08534
- WO-A1-2012/063802
- DE-A1- 4 401 756
- DE-A1-102005 034 422
- DE-T2- 60 114 198
- US-A- 2 272 271
- US-A- 2 741 936
- US-A1- 2002 012 574
- US-A1- 2011 318 118

## Beschreibung

Die Erfindung betrifft ein Verfahren zum Bearbeiten eines an einer Werkzeugmaschine eingespannten hohlen Werkstücks, insbesondere Zylinders, Zylinderrohres oder dergleichen, gemäß dem Oberbegriff des Anspruchs 1, bei dem in das Werkstück ein Schälwerkzeug eingeführt und dieses ausgeschält wird, welches Schälwerkzeug wenigstens zwei Führungsleisten zum Abstützen des Schälwerkzeugs am Werkstück, mindestens ein zwischen zwei Führungsleisten angeordnetes Schälmesser und eine an das Schälmesser anschließende Spankammer aufweist, wobei durch die Spankammer ein Kühlschmiermittel zum wenigstens Austragen zumindest eines beim Schälen anfallenden Spans strömt.

Ein Verfahren zum Bearbeiten eines an einer Werkzeugmaschine eingespannten hohlen Werkstücks ist aus der DE 60114198T2 bekannt.

Um Zylinder, Zylinderrohre und dgl. innenbearbeiten zu können, sind aus dem Stand der Technik Werkzeuge bekannt, die aus einem Schälwerkzeug und einem daran anschließenden Rollierwerkzeug bestehen (DE60114198T2, EP1153683B1). Bekannte Schälwerkzeuge weisen zwar an ihrem Schälkopf eine Spankammer auf, deren Späne werden jedoch in Vorschubrichtung des Schälwerkzeugs mit einem Kühlschmiermittelstrom vom Schälwerkzeug in Richtung der Einspannung des Werkstücks weggespült. Hierzu ist das Kühlschmiermittel mit erheblich hohen Drücken einzusetzen, um dieses durch das Werkzeug zu pressen und dabei auch sicherzustellen, dass alle Späne vom Schälwerkzeug weggespült werden. Zurückbleibende Späne stellen nämlich eine Gefahr für die Qualität der Innenbearbeitung dar, zumal nach einem Ausschälen keine weitere spanabhebende Bearbeitung des Werkstücks erfolgt. Zudem kann nach dem Stand der Technik selbst mit vergleichsweise hohem Kühlschmiermitteldruck ein Verkeilen der Späne an der Einspannung bzw. der Spindel der Werkzeugmaschine nicht ausgeschlossen werden - was zu einer Gefährdung der Reproduzierbarkeit des Verfahrens führt. Zurückbleibende Späne können zudem auch meist nur mit einem Ausspannen des Werkstücks sicher entfernt werden, wodurch sich erhebliche Zeitverzögerungen im Verfahren ergeben.

Aus der DE7624330U1 ist ein Aufbohrwerkzeug bekannt, durch das ein Kühl- und Schmiermittel entgegen der Vorschubrichtung des Aufbohrwerkzeugs strömt.

Die Erfindung hat sich daher die Aufgabe gestellt, ein Verfahren zum Bearbeiten eines an einer Werkzeugmaschine eingespannten hohlen Werkstücks derart zu verändern, dass die beim Schälen entstehenden Späne aus dem Werkstück sicher ausgetragen und das Werkstück damit schnell und reproduzierbar bearbeitet werden kann.

Die Erfindung löst die gestellte Aufgabe gemäß Anspruch 1 dadurch, dass das Werkstück bei einem gegen die Vorschubrichtung des Schälwerkzeugs durch das Werkstück strömenden Kühlschmiermittel ausgeschält wird, wobei das Kühlschmiermittel den Span durch die Spankammer seitlich am Schälwerkzeug vorbeiführt und aus dem Werkstück austrägt.

Wird das Werkstück bei einem gegen die Vorschubrichtung des Schälwerkzeugs durch das Werkstück strömenden Kühlschmiermittel ausgeschält, wobei das Kühlschmiermittel den Span durch die Spankammer seitlich am Schälwerkzeug vorbeiführt und aus dem Werkstück austrägt, kann sichergestellt werden, dass keine Späne vor dem Schälwerkzeug zurückbleiben - und somit unter anderem die Reproduzierbarkeit des Verfahrens gefährden. Ein rückwärtiger Spanaustrag am Schälwerkzeug kann also ermöglichen, dass der Hohlraum des Werkstücks nach dem Schälen frei von Spänen ist. Zudem eröffnet sich erfindungsgemäß die Möglichkeit, den Vorteil des durch das Schälmesser verengten Strömungsquerschnitts zu nützen, um durch erhöhte Strömungsgeschwindigkeiten für ein sicheres Vorbeiführen der Späne zu sorgen, auch wenn am Kühlschmiermittel ein vergleichsweise geringer Druck angelegt wird. Ein besonders energieeffizientes Verfahren kann somit erreicht werden. Die Verwendung eines Schälwerkzeugs mit dem erfindungsgemäßen Verfahren kann also den Austrag von beim Schälen entstehenden Spänen sicherstellen und damit in weiterer Folge auch gewährleisten, dass an das Schälen anschließende Bearbeitungsschritte nicht in Mitleidenschaft gezogen werden. Zudem kann sich mit dem erfindungsgemäßen Austrag von Spänen während des Schälens auch jener Vorteil ergeben, dass beim Rückziehen des Schälkopfs eventuell im Werkstück zurückbleibende Späne mit hinausgeschoben werden können. Ein zeitaufwendiges Befreien des Werkstücks von Spänen kann somit unterbleiben, was kurze Bearbeitungszeiten in der Herstellung eines Zylinders, Zylinderrohres oder dgl. ermöglichen kann.

Erfindungsgemäß wird die jeweilige Spankammer durch eine durchgehende Ausnehmung, einmündend in Stirn- und Rückseite des Schälwerkzeugs, beliebiger Gestalt ausgebildet. Die Ausnehmung für die Spankammer kann beispielsweise lediglich in einen gegenüber dem Schaft des Schälwerkzeugs im Durchmesser größer ausgebildeten Schälkopf eingebracht werden. Ein außenliegender Strömungsweg des Kühlschmiermittels, nämlich zwischen Werkstück und Schälwerkzeug kann so gebildet werden, um Späne aus dem Werkstück auszuspülen. Im Allgemeinen wird weiter erwähnt, dass Kühlschmiermittel und Späne in der Spankammer am Außenumfang des Schälwerkzeugs vorbei geführt werden.

Wird das Werkstück beim Zurückziehen des Schälwerkzeugs mit am Schälwerkzeug vorgesehenen rückwärtig gerichteten Düsen mit Kühlschmiermittel gespült, kann das geschälte Werkstück zusätzlich auch noch beim Entfernen des Schälkopfs von Spänen gesäubert werden. Ein spanfreier Hohlraum im Werkstück kann damit verbessert sichergestellt werden. Vorteilhaft können anschließende Bearbeitungsschritte in weiterer Folge ohne weitere Maßnahmen zur Säuberung des Werkstücks durchgeführt werden. Der erfindungsgemäße Schälkopf kann daher kurze Bearbeitungszeiten zum Schälen von Werkstücken gewährleisten und somit ein besonders schnelles Verfahren - etwa zur Herstellung eines Zylinders - ermöglichen.

Da erfindungsgemäß ein von Spänen freies Werkstück erreicht werden kann, kann auch ermöglicht werden, das Verfahren zu komplementieren, indem nach dem Ausschälen ein Rollierwerkzeug oder Glattwalzwerkzeug in das Werkstück eingeführt und dieses damit rolliert oder glattgewalzt wird.

Wird vor dem Ausschälen ein Aufbohrwerkzeug in das Werkstück eingeführt und dieses damit geschruppt, kann die Schnittbelastung des Schälwerkzeugs reduziert und damit die Reproduzierbarkeit des Verfahrens erhöht werden.

Erhöhte Genauigkeit in der Bearbeitung des Werkstücks kann ermöglicht werden, wenn nach dem Rollieren bzw. Glattwalzen ein Messwerkzeug in das Werkstück eingeführt und dieses damit vermessen wird.

Eine weitere Erleichterung in der Handhabung des Verfahrens kann sich ergeben, wenn für das Schruppen, Ausschälen und Rollieren bzw. Glattwalzen und insbesondere auch für das Vermessen dieselbe Trägerstange mit dem jeweiligen Werkzeug versehen wird. Somit kann nicht zuletzt die gemeinsame Aufspannung auf der Trägerstange am Werkzeughalter genutzt werden, für alle Werkzeuge die gleiche sowie dieselbe präzise Führung sicherzustellen.

Kurze Bearbeitungszeiten können reproduzierbar eingehalten werden, wenn Schruppen, Ausschälen und Rollieren bzw. Glattwalzen und insbesondere auch das Vermessen des Werkstücks in derselben Aufspannung des Werkstücks an der Werkzeugmaschine durchgeführt werden.

Führt die Spankammer den Span mit Hilfe von zwei längsseitigen Berandungen, von denen die eine Berandung parallel zu einer Führungsleiste verläuft und die andere Berandung ab dem Schälmesser der anderen Führungsleiste stetig zuläuft, kann die Sicherheit eines störungsfreien Austrags von Spänen gegen die Vorschubrichtung des Schälmessers erhöht werden. Dies vor allem, da die Spankammer durch ihre erfindungsgemäße Erweiterung vom Schälmesser in Richtung Rückseite des Schälkopfes Spänen mehr Freiheiten hinsichtlich ihrer Bewegung zur Verfügung stellen kann. Durch das verbesserte Ausspülen von Spänen kann die Reproduzierbarkeit des Verfahrens weiter erhöht werden.

Führt die Spankammer den Span im Bereich des Schälmessers mit Hilfe von zwei parallel verlaufenden Berandungen, kann durch diese konstruktiv einfache Maßnahme für eine gezielte und ausreichende Lenkung von Spänen gesorgt werden, indem sich für den Span parallele Führungsflächen ausbilden.

Ist der dem Schälmesser in Umfangsrichtung gegenüberliegende Bereich der längsseitigen Berandung auf die Höhe der Führungsleiste hochgezogen, können der Spankammer Späne verbessert zugeführt werden. Mithilfe dieses hochgezogenen, in der Art einer Barriere wirkenden Bereichs kann eine Lenkung der Späne in Richtung Spankammer erreicht werden.

Das Verfahren kann in seiner Handhabung erheblich erleichtert werden, wenn das über einen Messerhalter mit der Wand der Spankammer fest verbundene Schälmesser den Span erzeugt. So kann zudem über eine einfache Zugänglichkeit des Schälmessers der Wartungsaufwand am Schälwerkzeug reduziert werden.

In den Figuren ist beispielsweise der Erfindungsgegenstand anhand eines Ausführungsbeispiels näher dargestellt. Es zeigen
- Fig. 1: eine Schnittansicht eines Werkstücks, das in einer teilweise dargestellten Werkzeugmaschine eingespannt ist und ausgeschält wird,
- Fig. 2: eine Draufsicht auf einen Werkzeughalter der Werkzeugmaschine mit verschiedenen Werkzeugen,
- Fig. 3: eine dreidimensionale Seitenansicht auf das erfindungsgemäße Schälwerkzeug und
- Fig. 4: eine Stirnansicht auf das Schälwerkzeug nach Fig. 3.

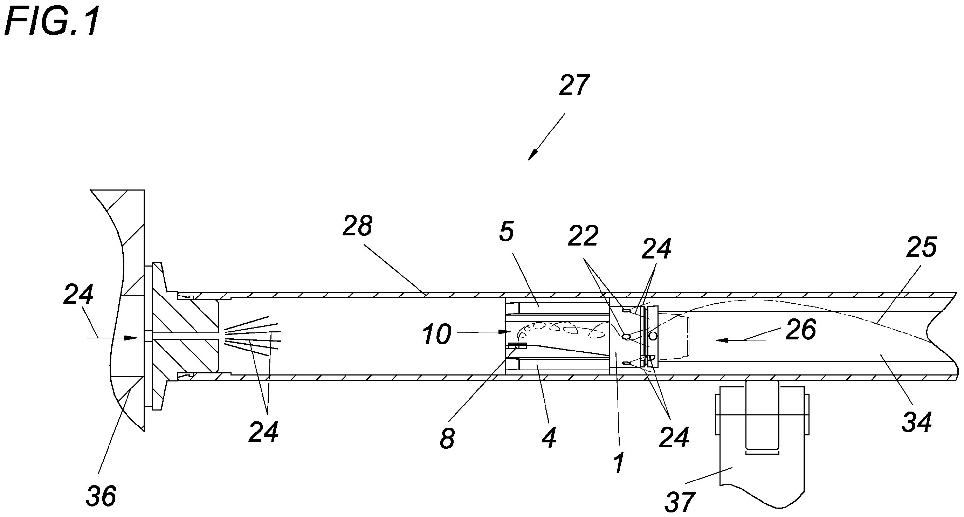

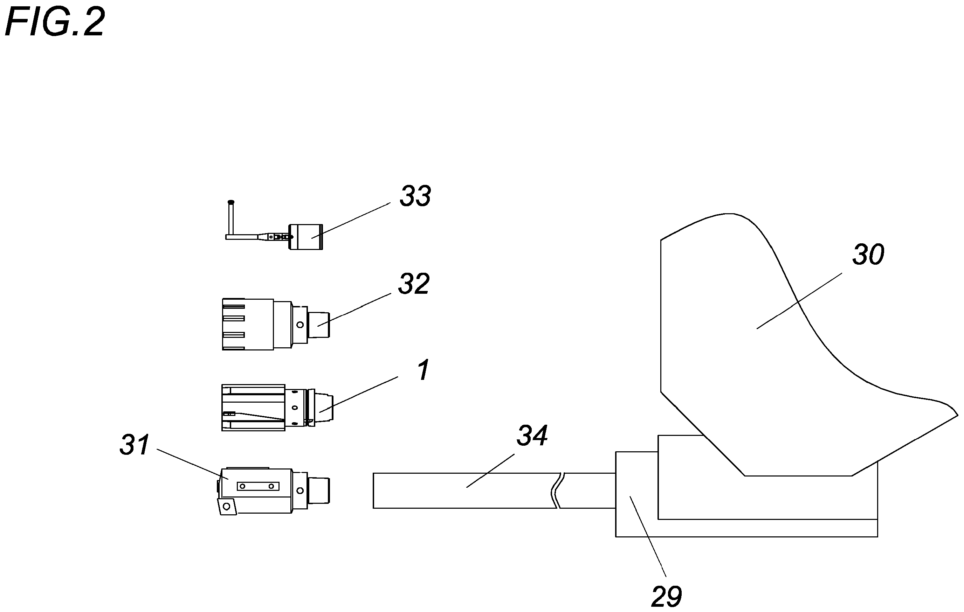

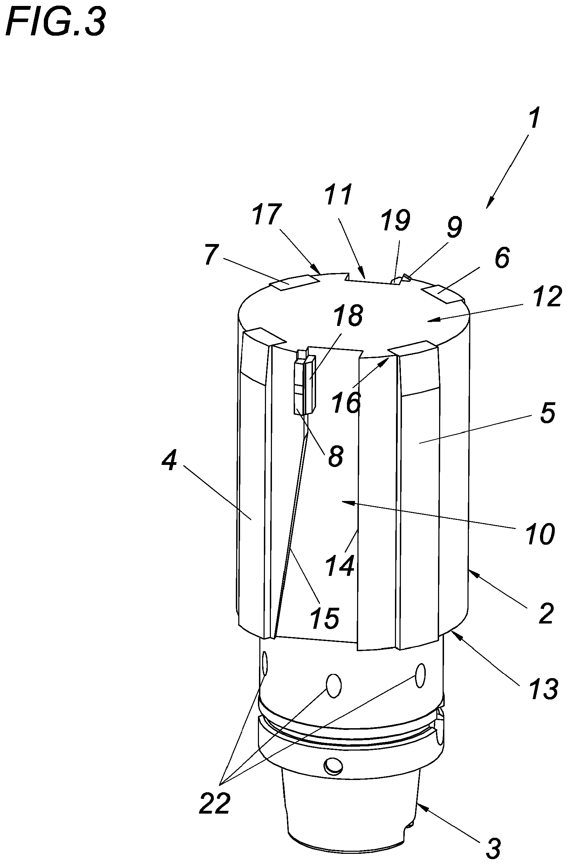

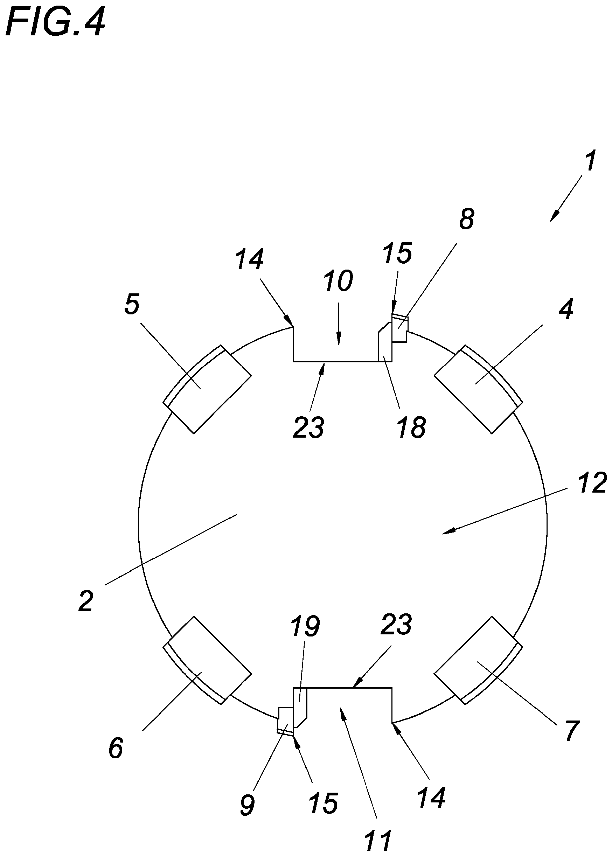

Das beispielsweise nach den Figuren 3 und 4 dargestellte Schälwerkzeug 1 wird zum Ausschälen von im Wesentlichen zylindrischen Hohlräumen von Werkstücken 28, nämlich eines Zylindermantels eines Zylinders, verwendet, wie an der Figur 1 zu erkennen. Um dies durchführen zu können, weist das Schälwerkzeug 1 einen Schälkopf 2 und einen Werkzeugschaft 3 auf, um das Schälwerkzeug 1 mit einer Werkzeugspindel 29 eines Werkzeughalters 30 zu verbinden, wie dies in Fig. 2 näher dargestellt ist.

Anhand von Fig. 4 ist auch ersichtlich, dass zur Zentrierung des Schälwerkzeugs 1 im Hohlraum des Werkstücks 28 am Schälkopf 2 vier diametral gegenüberliegende Führungsleisten 4, 5, 6, 7 vorgesehen sind, die sich über die gesamte Schälkopflänge erstrecken. Zudem sind dem Schälkopf 2 auswechselbare Schälmesser 8, 9 zugeordnet, die jeweils zwischen zwei Führungsleisten 4, 5 bzw. 6, 7 mittig angeordnet sind. Jedem Schälmesser 8, 9 anschließend folgt eine Spankammer 10 bzw. 11, die jeweils als von der Stirnseite 12 zur Rückseite 13 des Schälkopfs 2 am Schälkopf 2 durchgehende Ausnehmung 23 ausgebildet sind - siehe auch Fig. 4. Die Spankammern 10 bzw. 11 werden von längsseitigen Berandungen 14, 15 begrenzt, von denen eine längsseitige Berandung 14 parallel zur Führungsleiste 4 verläuft.

Um eine Spankammer 10 bzw. 11 zum Austragen von beim Schälen entstehenden Spänen 25 in Richtung Rückseite 13 des Schälkopfs 2 bzw. entgegen der Vorschubrichtung des Schälkopfs 2 zu ermöglichen, ist die andere längsseitige Berandung 15 besonders ausgeführt. Diese läuft ab dem Schälmesser 8 bzw. 9 der anderen Führungsleiste 4 bzw. 6 stetig zu, sodass Späne 25 sicher durch die längsseitige Berandung 14, 15 gelenkt und vom Schälkopf 2 in Richtung des Werkzeugschafts 3 geführt werden, der gegenüber dem Schälkopf 2 schlanker ausgeführt ist und so die Austragung der Späne 25 aus dem Werkstück 28 nicht behindert.

Die längsseitigen Berandungen 14, 15 der Spankammern 10, 11 verlaufen im Bereich des Schälmessers 8, 9 parallel, was die Spanumlenkung in Richtung des Werkzeugschafts 3 verbessern kann. Dies umso mehr, weil auch die dem Schälmesser 8, 9 radial gegenüberliegenden Bereiche 16, 17 der Berandungen 14, 15 auf die Höhe der jeweiligen Führungsleisten 5, 7 hochgezogen sind.

Die auswechselbaren Schälmesser 8, 9 sind für deren einfache Zugänglichkeit an der Wand der Spankammer 10, 11 befestigt, indem ein Messerhalter 18, 19 die Schälmesser 8, 9 mit der jeweiligen Wand form- und kraftschlüssig verbindet.

Um beim Rückzug des Schälkopfs 2 aus dem Werkstück 28 eventuell im Werkstück 28 zurückgebliebene Späne 25 mit austragen zu können, sind am Schälkopf 2 rückwärts gerichtete Öffnungen 22 für die Abgabe von Kühlschmiermittel 24 in den Hohlraum des Werkstücks vorgesehen.

Gemäß der Fig. 2 wird auf die verschiedenen Werkzeuge 1, 31, 32, 33 hingewiesen, die beim erfindungsgemäßen Verfahren zum Bearbeiten eines an einer Werkzeugmaschine 27 an ihrer Werkstückspindel 36 eingespannten hohlen Werkstücks 28 verwendet werden. So wird vor dem Ausschälen mit dem Schälwerkzeug 1 ein Aufbohrwerkzeug 31 in das eingespannte Werkstück 28 eingeführt und dieses damit geschruppt, um die Schneidbelastungen auf das nachfolgende Schälwerkzeug 1 zu reduzieren, mit welchem das Werkstück 28 in weiterer Folge ausgeschält wird. Nach dem Ausschälen mit dem Schälwerkzeug 1 wird ein Rollierwerkzeug 32 in das Werkstück 28 eingeführt und dieses damit rolliert, was eine erheblich verbesserte Oberflächenqualität garantiert. Nach dem Rollieren mit dem Rollierwerkzeug 32 wird ein Messwerkzeug 33 in das Werkstück 28 zu dessen Vermessung eingeführt - daraufhin wird eine so erkannte eventuelle Unregelmäßigkeit in der Wandstärke des Werkstücks 38 durch eine Außenbearbeitung des Werkstücks ausgeglichen. Hierzu kann beispielsweise ein nicht näher dargestellter Fräser verwendet werden. Zur Ausbildung einer Relativbewegung zwischen dem jeweiligen Werkzeug 1, 31, 32, 33 und dem Werkstück 28 kann entweder das Werkzeug 1, 31, 32, 33 mithilfe der Werkzeugspindel 29 und/oder das Werkstück 28 über die Werkstückspindel 36 gedreht werden.

Die Werkzeuge 1, 31, 32, 33 für das Schruppen, Ausschälen, Rollieren und Vermessen werden von derselben Trägerstange 34 aufgenommen, die an der Werkzeugspindel 29 des Werkzeughalters 30 befestigt ist. Das erfindungsgemäße Verfahren ist dadurch besonders handhabungsfreundlich. Zudem wird das Schruppen, Ausschälen, Rollieren, Vermessen bzw. das eventuelle Nachbearbeiten der Außenseite des Werkstücks 28 in der gleichen Aufspannung des Werkstücks 28 an der Werkzeugmaschine durchgeführt, wodurch der Verfahrensablauf erleichtert und die Durchführung des Verfahrens beschleunigt werden.

Solch eine Aufspannung ist in Fig. 1 dargestellt, bei der das Werkstück 28 an der Werkstückspindel 36 eingespannt und auf einer Lünette 37 der Werkzeugmaschine 27 beweglich gelagert ist.

## Patentansprüche

1. Verfahren zum Bearbeiten eines an einer Werkzeugmaschine (27) eingespannten hohlen Werkstücks (28), insbesondere Zylinders oder Zylinderrohres, bei dem in das Werkstück (28) ein Schälwerkzeug (1) eingeführt und dieses ausgeschält wird, welches Schälwerkzeug (1) wenigstens zwei Führungsleisten (4, 5, 6, 7) zum Abstützen des Schälwerkzeugs am Werkstück (28), mindestens ein zwischen zwei Führungsleisten (4, 5 bzw. 6, 7) angeordnetes Schälmesser (8, 9) und eine an das Schälmesser (8, 9) anschließende Spankammer (10, 11) aufweist, die durch eine durchgehende Ausnehmung, einmündend in die Stirn- und Rückseite (12, 13) des Schälwerkzeugs (1), ausgebidet ist, wobei durch die durchgehende Spankammer (10, 11) ein Kühlschmiermittel (24) zum wenigstens Austragen zumindest eines beim Schälen anfallenden Spans (25) strömt, **dadurch gekennzeichnet, dass** das Werkstück (28) bei einem gegen die Vorschubrichtung (26) des Schälwerkzeugs (1) durch das Werkstück (28) strömenden Kühlschmiermittel (24) ausgeschält wird, wobei das Kühlschmiermittel (24) den Span (25) durch die Spankammer (10, 11) seitlich am Schälwerkzeug (1) vorbeiführt und aus dem Werkstück (28) austrägt.

2. Verfahren nach Anspruch 1, **dadurch gekennzeichnet, dass** das Werkstück (28) beim Zurückziehen des Schälwerkzeugs (1) mit am Schälwerkzeug vorgesehenen rückwärtig gerichteten Düsen (22) mit Kühlschmiermittel (24) gespült wird.

3. Verfahren nach Anspruch 1 oder 2, **dadurch gekennzeichnet, dass** nach dem Ausschälen ein Rollierwerkzeug (32) oder Glattwalzwerkzeug in das Werkstück (28) eingeführt und dieses damit rolliert oder glattgewalzt wird.

4. Verfahren nach Anspruch 1, 2 oder 3, **dadurch gekennzeichnet, dass** vor dem Ausschälen ein Aufbohrwerkzeug (31) in das Werkstück (28) eingeführt und dieses damit geschruppt wird.

5. Verfahren nach Anspruch 3 oder 4, **dadurch gekennzeichnet, dass** nach dem Rollieren bzw. Glattwalzen ein Messwerkzeug (33) in das Werkstück (28) eingeführt und dieses damit vermessen wird.

6. Verfahren nach Anspruch 4 oder 5, **dadurch gekennzeichnet, dass** für das Schruppen, Ausschälen und Rollieren bzw. Glattwalzen und insbesondere auch für das Vermessen dieselbe Trägerstange (34) mit dem jeweiligen Werkzeug (1, 31, 32, 33) versehen wird.

7. Verfahren nach Anspruch 4, 5 oder 6, **dadurch gekennzeichnet, dass** Schruppen, Ausschälen und Rollieren bzw. Glattwalzen und insbesondere auch das Vermessen des Werkstücks (28) in derselben Aufspannung des Werkstücks (28) an der Werkzeugmaschine (27) durchgeführt werden.

8. Verfahren nach einem der Ansprüche 1 bis 7, **dadurch gekennzeichnet, dass** die Spankammer (10, 11) den Span (25) mit Hilfe von zwei längsseitigen Berandungen (14, 15) führt, von denen die eine Berandung (14) parallel zu einer Führungsleiste (5, 7) verläuft und die andere Berandung (15) ab dem Schälmesser (8, 9) der anderen Führungsleiste (4, 6) stetig zuläuft.

9. Verfahren nach einem der Ansprüche 1 bis 8, **dadurch gekennzeichnet, dass** die Spankammer (10, 11) den Span (25) im Bereich des Schälmessers (8, 9) mit Hilfe von zwei parallel verlaufenden Berandungen (14, 15) führt.

10. Verfahren nach einem der Ansprüche 1 bis 9, **dadurch gekennzeichnet, dass** der dem Schälmesser (8, 9) in Umfangsrichtung gegenüberliegende Bereich (16, 17) der längsseitigen Berandung (14) auf die Höhe der Führungsleiste (5, 7) hochgezogen ist.

11. Verfahren nach einem der Ansprüche 1 bis 10, **dadurch gekennzeichnet, dass** das über einen Messerhalter (18, 19) mit der Wand der Spankammer (10, 11) fest verbundene Schälmesser (8, 9) den Span (25) erzeugt.

## Claims

1. Method for machining a hollow workpiece (28) clamped on a machine tool (27), more particularly a cylinder or cylinder tube, in which a peeling tool (1) is introduced into the workpiece (28) and the latter is peeled off, which peeling tool (1) comprises at least two guide strips (4, 5, 6, 7) for supporting the peeling tool on the workpiece (28), at least one peeling knife (8, 9) arranged between two guide strips (4, 5 and 6, 7) and a chip chamber (10, 11) adjoining the peeling knife (8, 9), which is formed by a continuous recess opening into the front and rear sides (12, 13) of the peeling tool (1), wherein a cooling lubricant (24) flows through the continuous chip chamber (10, 11) for at least discharging at least one chip (25) produced during peeling, **characterized in that** the workpiece (28) is peeled off with a cooling lubricant (24) flowing through the workpiece (28) against the feed direction (26) of the peeling tool (1), wherein the cooling lubricant (24) guides the chip (25) through the chip chamber (10, 11) laterally past the peeling tool (1) and discharges it from the workpiece (28).

2. Method according to claim 1, **characterized in that** the workpiece (28) is flushed with cooling lubricant (24) with rearwardly directed nozzles (22) provided on the peeling tool when the peeling tool (1) is withdrawn.

3. Method according to claim 1 or 2, **characterized in that** after peeling, a roller burnishing tool (32) or smoothing tool is introduced into the workpiece (28) and the latter is thus roller burnished or smooth rolled.

4. Method according to claim 1, 2 or 3, **characterized in that** before peeling, a boring tool (31) is inserted into the workpiece (28) and the workpiece is roughed therewith.

5. Method according to claim 3 or 4, **characterized in that** after rolling or burnishing, a measuring tool (33) is inserted into the workpiece (28) and the workpiece is measured therewith.

6. Method according to claim 4 or 5, **characterized in that** for roughing, peeling and rolling or smooth rolling and more particularly also for measuring, the same carrier bar (34) is provided with the respective tool (1, 31, 32, 33).

7. Method according to claim 4, 5 or 6, **characterized in that** roughing, peeling and rolling or smooth rolling and more particularly also the measuring of the workpiece (28) are carried out in the same clamping of the workpiece (28) on the machine tool (27).

8. Method according to one of claims 1 to 7, **characterized in that** the chip chamber (10, 11) guides the chip (25) with the aid of two longitudinal edges (14, 15), of which the one edge (14) extends parallel to a guide strip (5, 7) and the other edge (15) tapers continuously from the peeling blade (8, 9) of the other guide strip (4, 6).

9. Method according to one of claims 1 to 8, **characterized in that** the chip chamber (10, 11) guides the chip (25) in the region of the peeling knife (8, 9) with the aid of two parallel extending edges (14, 15).

10. Method according to one of claims 1 to 9, **characterized in that** the region (16, 17) of the longitudinal edge (14) opposite the peeling knife (8, 9) in the circumferential direction is raised to the height of the guide strip (5, 7).

11. Method according to one of claims 1 to 10, **characterized in that** the peeling knife (8, 9), which is firmly connected to the wall of the chip chamber (10, 11) via a knife holder (18, 19), produces the chip (25).

## Revendications

1. Procédé pour l'usinage d'une pièce creuse (28) serrée sur une machine-outil (27), en particulier d'un cylindre ou d'un tube cylindrique, dans lequel un outil de pelage (1) est introduit dans la pièce (28) et celle-ci est pelée, lequel outil de pelage (1) présente au moins deux glissières de guidage (4, 5, 6, 7) pour l'appui de l'outil de pelage sur la pièce (28), au moins une lame de pelage (8, 9) disposée entre deux glissières de guidage (4, 5, respectivement 6, 7) et une chambre à copeaux (10, 11) qui est formée par un évidement continu s'ouvrant dans les côtés avant et arrière (12, 13) de l'outil de pelage (1), un lubrifiant de refroidissement (24) s'écoulant à travers la chambre à copeaux continue (10, 11) pour au moins évacuer au moins un copeau (25) produit lors du pelage, **caractérisé en ce que** la pièce (28) est pelée tandis qu'un lubrifiant de refroidissement (24) s'écoule à travers la pièce (28) à l'encontre de la direction d'avance (26) de l'outil de pelage (1), le lubrifiant de refroidissement (24) conduisant le copeau (25) à travers la chambre à copeau (10, 11) latéralement devant l'outil de pelage (1) et l'évacuant de la pièce (28).

2. Procédé selon la revendication 1, **caractérisé en ce que** la pièce (28) est rincée avec du lubrifiant de refroidissement (24) avec des buses (22) dirigées vers l'arrière et prévues sur l'outil de pelage lors du retrait de l'outil de pelage (1).

3. Procédé selon la revendication 1 ou 2, **caractérisé en ce qu'**après le pelage, un outil de galetage (32) ou un outil de lissage est introduit dans la pièce (28) et celle-ci est ainsi galetée ou lissée.

4. Procédé selon la revendication 1, 2 ou 3, **caractérisé en ce qu'**avant le pelage, un outil d'alésage (31) est introduit dans la pièce (28), avec lequel celle-ci est dégrossie.

5. Procédé selon la revendication 3 ou 4, **caractérisé en ce qu'**après le galetage ou le lissage, un outil de mesure (33) est inséré dans la pièce (28), avec lequel celle-ci est mesurée.

6. Procédé selon la revendication 4 ou 5, **caractérisé en ce que** pour le dégrossissage, le pelage et le galetage ou le lissage, et en particulier aussi pour la mesure, la même tige de support (34) est munie de l'outil respectif (1, 31, 32, 33).

7. Procédé selon la revendication 4, 5 ou 6, **caractérisé en ce que** le dégrossissage, le pelage et le galetage ou le lissage et en particulier aussi la mesure de la pièce (28) sont effectués dans la même opération de serrage de la pièce (28) sur la machine-outil (27).

8. Procédé selon l'une des revendications 1 à 7, **caractérisé en ce que** la chambre à copeaux (10, 11) guide le copeau (25) à l'aide de deux bords longitudinaux (14, 15), dont un bord (14) s'étend parallèlement à une glissière de guidage (5, 7) et l'autre bord (15) s'étend en s'effilant de manière continue vers l'autre glissière de guidage (4, 6) à partir de la lame de pelage (8, 9).

9. Procédé selon l'une des revendications 1 à 8, **caractérisé en ce que** la chambre à copeaux (10, 11) guide le copeau (25) à l'aide de deux bord parallèles (14, 15) dans la zone de la lame de pelage (8, 9).

10. Procédé selon l'une des revendications 1 à 9, **caractérisé en ce que** la zone (16, 17) du bord longitudinal (14) opposée à la lame de pelage (8, 9) dans la direction circonférentielle est relevée à la hauteur de la glissière de guidage (5, 7).

11. Procédé selon l'une des revendications 1 à 10, **caractérisé en ce que** la lame de pelage (8, 9), qui est reliée rigidement à la paroi de la chambre à copeaux (10, 11) par un porte-lame (18, 19), produit le copeau (25).
